# EUROPÄISCHE PATENTANMELDUNG

(11) **EP 1 900 418 A1**
(43) Veröffentlichungstag der Anmeldung: **19.03.2008**
(21) Anmeldenummer: 07016507.1
(22) Anmeldetag: 23.08.2007
(51) Int. Cl.: B01D 71/02, B01D 67/00, C25D 11/04, H01M 8/02

(54) **Membran für eine Brennstoffzelle und Verfahren zu ihrer Herstellung**

(30) Priorität: 07.09.2006 EP 06018674; 23.05.2007 IT MI20071043
(71) Anmelder: Becromal S.p.A., I-20089 Quinto de' Stampi Rozzano (MI) (IT)
(72) Erfinder: Ebel, Thomas, 20090 Segrate Milano (IT)
(74) Vertreter: KEIL & SCHAAFHAUSEN Patentanwälte

(57) **Zusammenfassung**

Es werden eine Membran für eine Brennstoffzelle mit einer Aluminiumfolie als Trägermedium, welche einer anodischen Oxidierung unterzogen ist und in welche nach der anodischen Oxidierung ein Wassersoffionenleiter einbringbar ist, sowie ein Verfahren zu ihrer Herstellung beschrieben. Zur Verbesserung deren mechanischen Eigenschaften ist Aluminiumfolie vor der anodischen Oxidierung einer Tunnelätzung unterzogen.

## Beschreibung

Die Erfindung betrifft eine Membran für eine Brennstoffzelle und ein Verfahren zu ihrer Herstellung.

Als Trägermedium für die Membran wird in an sich bekannter Weise eine Aluminiumfolie verwendet, die einer anodischen Oxidation unterzogen worden ist und in deren Poren ein Wasserstoffionenleiter eingebracht ist.

Eine solche Membran ist bspw. aus der EP 1 391 235 A2 bekannt, wobei die Membran - Matrix eine keramische Matrix aus porösem Aluminiumoxid ist, in deren Poren in geeigneter Weise ein Wasserstoffionenleiter eingebracht werden kann, um eine hohe Protonenleitfähigkeit zu erreichen. Eine derartige Membran ist mechanisch jedoch sehr instabil und damit brüchig. Bei einer späteren Anwendung in der Brennstoffzelle, z.B. in einem Auto, sind alle Bestandteile hohen Schwingungsbelastungen ausgesetzt. Es besteht daher die Gefahr eines Bruches und damit einem Versagen der Funktion der Membran.

Aufgabe der Erfindung ist es, eine Membran mit hoher Protonenleitfähigkeit und gleichzeitig verbesserten mechanischen Eigenschaften zu schaffen.

Diese Aufgabe wird mit den Merkmalen der Ansprüche 1 bis 12 gelöst. Dabei ist insbesondere vorgesehen, dass die Aluminiumfolie vor der anodischen Oxidation einer Tunnelätzung unterzogen ist. Eine derart anodisierte Aluminiumfolie ist mechanisch sehr viel stabiler als eine keramische Matrix und lässt sich sogar wickeln. Ferner kann die Membran in einem kontinuierlichen Verfahren hergestellt werden, welches bezüglich der Produktivität Vorteile im Vergleich zu einem Eintopf-(Batch)-Verfahren bietet.

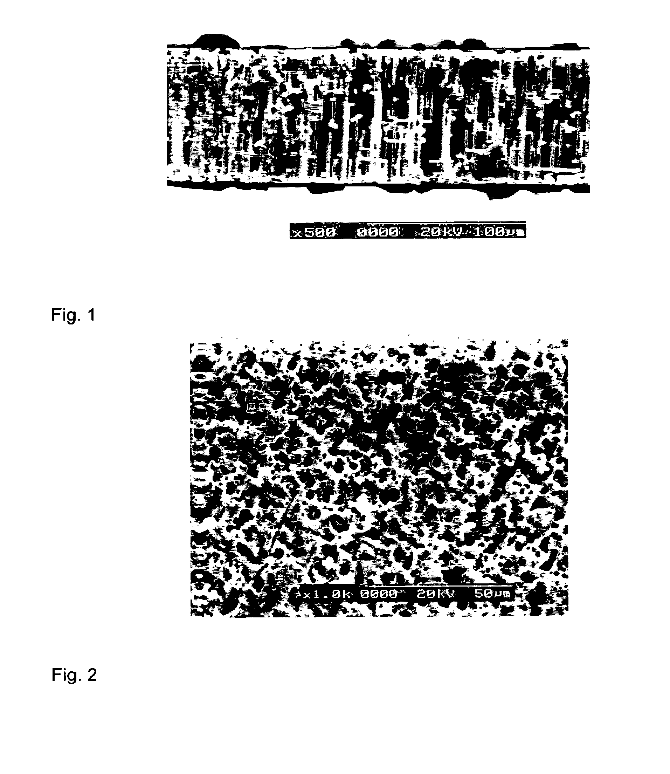

Fig. 1 und Fig. 2 zeigen einen Querschnitt und eine Oberfläche einer erfindungsgemäßen Membranträgerfolie.

Die Charakteristik der erfindungsgemäß als Anodenfolie dienenden Membranträgerfolie gemäß den Fig. 1 und 2 ist folgende:

Bei der Dicke der Anodenfolie zwischen 20 bis 200 µm oder vorzugsweise 40 bis 200 µm weist die Folie eine für eine Brennstoffzelle besonders geeignete Dicke auf, die gleichzeitig ausreichend stabil und formbar ist. Um eine reibungslose Funktion der Brennstoffzelle zu ermöglichen und geeignete Trägereigenschaften aufzuweisen, sollte die Anodenfolie eine Zusammensetzung von vorzugsweise 99.99 % Al aufweisen.

Die Tunneldichte sollte, um eine ausreichende Befüllung mit protonenleitendem Material zu erreichen, etwa zwischen 10⁵ bis 10⁸ Tunnel/cm² liegen, wobei sich eine Tunnellänge zwischen 20 bis 100 oder auch 50 bis 100 µm bei einem Tunneldurchmesser zwischen 0,2 bis 1 µm besonders gut füllen lässt. Mit einer derartigen Struktur werden auch geeignete Betriebsbedingungen erreicht.

Die als Oberflächenschutz vorgesehene Oxidschicht sollte vorzugsweise eine Dicke zwischen 10 bis 800 nm aufweisen, wobei für viele Anwendungen auch eine Dicke zwischen 10 bis 200 nm sinnvoll und ausreichend ist. Das Oxid kann zur Stabilisierung phosphatiert werden, wobei vorzugsweise ein Phosphatgehalt zwischen 0,5 bis 2 mg pro m² erreicht wird.

Es hat sich herausgestellt, dass eine Aluminiumfolie mit diesen Eigenschaften besonders zur Füllung mit einem Wasserstoffionenleiter geeignet ist und dann als leistungsfähige und mechanisch robuste Membran für Hochtemperatur-Brennstoffzellen verwendet werden kann.

Nachfolgend wird das Verfahren zu Herstellung der erfindungsgemäßen Membran näher beschrieben.

Die Tunnelätzung erfolgt vorzugsweise durch Ätzung in 1 N Salzsäure bei 60 bis 90 °C, wobei insbesondere eine elektrochemische Ätzung mit einer Stromdichte zwischen 0.1 bis 1 mA/cm² in der Praxis vorteilhafte Ergebnisse gebracht hat. Die durch die vorbeschriebene Tunnelätzung besonders strukturierte Aluminiumfolie wird durch eine nachfolgende anodische Oxidierung (Formierung) oberflächengeschützt.

Dazu wird bei der Formierung in vorzugsweise 5% Borsäure bei einer Stromdichte von etwa 0.1 mA/cm² und einer Temperatur in einem Bereich zwischen insbesondere 70 bis 90 C° ein 2 bis 800 nm dicker Barrierelayer (Dielektrikum) insbesondere aus gamma Alumina gebildet, wobei sich in vielen Anwendungsfällen eine Mindestschichtdicke von 10 nm und/oder ein Maximalschichtdicke von 200 nm als vorteilhaft erwiesen hat. Das Oxid wird während der Formierung über einen Phosohatierungsschritt und eine sich anschließende Endphosphatierung in 0,1 bis 10% Ammonumphosphatlösung chemisch stabilisiert. Diese Behandlung gewährleistet eine ausreichende chemische Stabilität des Aluminiums gegenüber der starken Säurestärke des Protonenleiters. Die Dicke des Barrierelayers variiert in Abhängigkeit von der angelegten Spannung und kann geeignet eingestellt werden.

Die so verarbeitete Folie kann dann in die jeweilige benötigte Breite, Größe oder Form geschnitten werden.

In diese Struktur wird über einen Imprägnierprozess eine Lösung eines potentiellen Wasserstoffionenleiters, z.B. Phosporwolframsaeure, Caesiumhydrogensulfat oder Nafion® eingebracht. Für Nafion® kann bspw. folgender Prozess vorgeschlagen werden: eine alkoholische/wässrige Lösung von Nafion® (z.B. LQ-1105 5 Gew.-% Nafion®, fertige Lösung der Firma ION Power, lnc.) wird über einen Tauchprozess eingebracht. Die Lösung wird bei 50 C° getrocknet, um das Polymer abzuscheiden. Um leitende Protonen einzubringen, wird das Aluminium/Polymer-Komposit mit vorzugsweise 80 bis 100 C° heißer 1 M H₂SO₄ 0.1 bis 1 Stunde behandelt. Überschüssige Schwefelsäure wird in einem Waschprozess entfernt.

Alternativ kann auch das Salz des Wasserstoffionenleiters bei vorzugsweise Raumtemperatur zur Auskristallisation gebracht werden.

Die so behandelte Folie kann dann als temperaturstabile (bis etwa 170 C°) Membran für Hochtemperaturbrennstoffzellen verwendet werden. Entsprechend bezieht sich die Erfindung auch auf die Anwendung einer speziell geätzten und formierten Aluminiumfolie als Trägermedium für Wasserstoffionenleiter in der Funktion als Membran für Hochtemperatur-Brennstoffzellen.

## Patentansprüche

1. Membran für eine Brennstoffzelle mit einer Aluminiumfolie als Trägermedium, welche einer anodischen Oxidierung unterzogen ist und in welche nach der anodischen Oxidierung ein Wassersoffionenleiter einbringbar ist, **dadurch gekennzeichnet, dass** die Aluminiumfolie vor der anodischen Oxidierung einer Tunnelätzung unterzogen ist.

2. Membran nach Anspruch 1, **dadurch gekennzeichnet**, die Aluminiumfolie als Anodenfolie mit einer Dicke zwischen 20 bis 200 µm ausgebildet ist.

3. Membran nach Anspruch 1 oder 2, **dadurch gekennzeichnet, dass** die Aluminiumfolie eine Zusammensetzung von 99.99% Al aufweist.

4. Membran nach einem der vorhergehenden Ansprüche, **dadurch gekennzeichnet, dass** die Membran eine Tunneldichte zwischen 10⁵ bis 10⁸ Tunnel pro cm² aufweist.

5. Membran nach einem der vorhergehenden Ansprüche, **dadurch gekennzeichnet, dass** der Tunneldurchmesser zwischen 0,2 bis 1 µm liegt.

6. Membran nach einem der vorhergehenden Ansprüche, **dadurch gekennzeichnet, dass** die Tunnellänge zwischen 20 und 100 µm beträgt.

7. Membran nach einem der vorhergehenden Ansprüche, **dadurch gekennzeichnet, dass** die Oxiddicke zwischen 10 bis 800, insbesondere zwischen 10 bis 200 nm, liegt.

8. Membran nach einem der vorhergehenden Ansprüche, **dadurch gekennzeichnet, dass** der Phosphatgehalt der Membran zwischen 0,5 bis 2 mg/m² liegt.

9. Verwendung einer Membran nach einem der Ansprüche 1 bis 8 als Trägermaterial für Wasserstoffionenleiter für Hochtemperatur-Brennstoffzellen.

10. Verfahren zur Herstellung einer Membran für eine Brennstoffzelle, bei einem eine Aluminiumfolie zur Strukturierung einer Tunnelätzung unterzogen wird, die strukturierte Aluminiumfolie als Oberflächenschutz einer anodischen Oxidation unterzogen wird und nachfolgend ein Wasserstoffionenleiter in die Struktur der Aluminiumfolie eingebracht wird.

11. Verfahren nach Anspruch 10, **dadurch gekennzeichnet, dass** die Tunnelätzung eine elektrochemische Ätzung bei einem Strom zwischen 0,1 und 1 mA/cm² in vorzugsweise 1 N Salzsäure bei einer Temperatur von vorzugsweise 60 bis 90°C ist.

12. Verfahren nach Anspruch 10 oder 11, **dadurch gekennzeichnet, dass** bei der Oxidation eine Phosphatierung des Oxids erfolgt.
